(19) Europäisches Patentamt
European Patent Office
Office européen des brevets

(11) **EP 2 025 716 A1**

(12) **EUROPEAN PATENT APPLICATION**
published in accordance with Art. 153(4) EPC

(43) Date of publication:
**18.02.2009 Bulletin 2009/08**

(21) Application number: **07737218.3**

(22) Date of filing: **25.05.2007**

(51) Int Cl.:
**C08L 77/00** (2006.01)   **C08K 7/00** (2006.01)
**C08L 77/06** (2006.01)

(86) International application number:
**PCT/JP2007/000562**

(87) International publication number:
**WO 2007/138743 (06.12.2007 Gazette 2007/49)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **30.05.2006 JP 2006149623**

(71) Applicant: **Mitsubishi Engineering-Plastics Corporation**
**Chuo-ku**
**Tokyo 104-0031 (JP)**

(72) Inventors:
• **KUMAZAWA, Teruhisa**
  **Hiratsuka-shi, Kanagawa 254-0016 (JP)**
• **MORIMOTO, Kei**
  **Hiratsuka-shi, Kanagawa 254-0016 (JP)**

(74) Representative: **Duckworth, Timothy John**
**J.A. Kemp & Co.,**
**14 South Square,**
**Gray's Inn**
**London WC1R 5JJ (GB)**

(54) **POLYAMIDE RESIN COMPOSITION AND MOLDED ARTICLE**

(57)   In the present invention, there is provided a polyamide resin composition for portable electronic devices, which is excellent in mechanical strength, thin-wall moldability, crystallinity and warping property.

A polyamide resin composition comprising 30 to 80% by weight of a polyamide MP (A), 20 to 70% by weight of a polyamide resin (B) having a melting point not less than 245°C (with the total amount of both being 100% by weight). The composition additionally comprises a filler (C) comprising a fibrous filler (C1) as an optional component and a plate-like filler (C2) as an essential com-ponent, wherein a content ratio (C1):(C2) is 0:10 to 9:1. The filler (C) is present in an amount of 30 to 250 parts by weight per 100 parts by weight of the sum of the polyamide MP (A) and the polyamide resin (B). The polyamide MP (A) is a polyamide resin obtained by polycondensation of a mixed diamine, which comprises 90 to 50% by mole of metaxylylenediamine and 10 to 50% by mole of paraxylylenediamine, with an $\alpha,\omega$-linear aliphatic dibasic acid and/or an aromatic dibasic acid.

EP 2 025 716 A1

**Description**

TECHNICAL FIELD

The present invention relates to a polyamide resin composition and to a molded article. More specifically, the present invention is directed to a polyamide resin composition which is excellent in mechanical strength, thin-wall moldability, crystallinity and warping property and which is suitable for thin-walled, flat plate-like component parts of portable electronic devices and to a molded article.

BACKGROUND ART

Portable electronic devices such as PDAs, portable game machines and cellular phones have a great possibility of being dropped while being handled or carried. Therefore, drop impact resistance is an important characteristic of exterior component parts, particularly casings, of such devices. When it is permissive to increase the thickness of the article, a non-reinforced polycarbonate resin or ABS resin having excellent impact resistance is usable. A resin composition comprising the above resin and a small amount of a filler may also be used.

Portable electronic devices occasionally require flat plate-like component parts which are not exposed to the outside and which must have rigidity to support inside structures. For instance, in a design of a backside of a keyboard, there are cases where a backing plate for supporting keys is required. In lieu of the backing plate, a circuit board itself may be used. When the circuit board itself is required to have strength and rigidity, however, it is difficult to select a material for the circuit board, because such a material must have not only proper electrical characteristics, such as dielectric constant and dielectric dissipation factor, but also mechanical strength and rigidity. In liquid crystal display panels, too, there are cases where a backing plate and a frame must be used. In such cases, the material for them should be capable of exhibiting high rigidity and low warpage even when they are thin. As a countermeasure for the above demands, there is an option to use magnesium thixomolding, a dicast metal or an iron plate work. It is, however, difficult to use a metal in the case where light weight, electrical insulation and transparency to electromagnetic waves are required.

Thus, in place of such a metal or iron plate work, thermoplastic materials for injection molding having excellent mass production efficiency, high rigidity and high strength are used. As an example of the thermoplastic materials for injection molding, a resin composition comprising, as its main component, a xylylenediamine-based polyamide resin (hereinafter referred to as "polyamide MX" for brevity) obtained by polycondensation of an α,ω-linear aliphatic dibasic acid with xylylenediamine is proposed. Since the polyamide MX resin has a low crystallization rate, however, a thin wall molded article produced from its resin composition has a low degree of crystallization. Thus, it is necessary to increase the degree of crystallization by performing the molding at a mold temperature of as high as 130°C or more, or by subjecting molded products to an annealing treatment. When molding is carried out at an increased mold temperature, however, molds tend to thermally deform so that flashes are apt to be formed in the molded products. It is, therefore, difficult to obtain good molded articles, unless a high-level technique of mold fabrication is feasible.

For example, a polyamide resin composition for molding which has excellent molding workability is proposed. The composition comprises a mixed polyamide resin comprising a polyamide MX and a polyamide 66, and a glass fiber compounded therein. Because the polyamide 66 is contained in the composition, the crystallization rate can be accelerated so that the molding cycle time can be reduced (Patent Document 1). The polyamide MX used in the working examples is a polyamide resin obtained from metaxylylenediamine and adipic acid (hereinafter referred to as polyamide MXD6 for brevity). Compounding of a polyamide MXD6 in a polyamide 66, however, causes disadvantages that the moisture absorption amount of the resin composition increases and the mechanical strength thereof decreases. Additionally, there occasionally remains a problem in thin-wall moldability and in dimensional stability, such as warpage and shrinkage, of thin-wall molded articles.

A resin composition is also proposed which comprises a polyamide resin obtained from a mixed xylylenediamine (comprising paraxylylenediamine and metaxylylenediamine) and an α,ω-linear aliphatic dibasic acid (hereinafter referred to as polyamide MP for brevity), and talc as a crystal nucleating agent compounded therein (Patent Document 2). Because no polyamide 66 is used in this proposal, heat resistance and moisture absorbing characteristics of the resin composition, which have been problematic in the technique of previously described proposal, may be improved. Therefore, it is possible to accelerate the crystallization rate and to improve moldability of the resin composition without being compounded with a polyamide 66. With this technique, however, it is necessary to increase the mold temperature to 130°C during molding. Further, when thin-wall molded articles are attempted to be produced, crystallization failure occurs.

A resin composition comprising a polyamide resin obtained from xylylenediamine and an α,ω-linear aliphatic dibasic acid, and boron nitride as a crystal nucleating agent compounded therein is proposed. It is suggested that in order to ensure a sufficient crystallization rate at the time of the molding, it is necessary to compound not only boron nitride but also polyamide 66 when the ratio of paraxylylenediamine to metaxylylenediamine used for polycondensation for obtaining the polyamide resin is (0 to 10 mole %):(100 to 90 mole %), but it is not necessary to compound polyamide 66 when the ratio of paraxylylenediamine to metaxylylenediamine is (10 to 45 mole %):(90 to 55 mole %) (Patent Document 3).

A polyamide resin composition comprising 100 parts by weight of a mixed polyamide resin comprising 20 to 90% by weight of a polyamide 6 resin and/or a polyamide 66 resin and 10 to 80% by weight of an aromatic polyamide resin and, compounded therein, 0 to 300 parts by weight of an inorganic filler and 0.01 to 5 parts by weight of a copper compound and/or a halogen compound is disclosed. It is suggested that the polyamide resin composition, which has not only excellent properties inherent to the polyamide but also particularly excellent light resistance, can be utilized as exterior component parts of automobiles and railways, and component parts for construction materials and housing equipments (Patent Document 4). Disclosed in the working examples are resin compositions comprising a mixed polyamide resin comprising a polyamide 6 resin and an aromatic polyamide resin and, compounded therein, an inorganic filler, a copper compound and a halogen compound. When the resin compositions described in Patent Documents 3 and 4, which do not have a sufficient crystallization rate, are used for molding thin-wall molded articles having a thickness of about 1 mm, however, the obtained thin-wall molded articles cannot be said to be satisfactory with respect to the degree of crystallization, warping property and flash formation.

A casing for an electronic device having excellent rigidity, toughness and dimensional stability is disclosed. The casing is characterized by being molded from a molding material obtained by mixing a mixed base material comprising an aromatic polyamide, an amorphous polyamide and a polyamide 6 with a fibrous reinforcing material such as a glass fiber and a carbon fiber (Patent Document 5). With such a technique, however, it is necessary to employ a mold temperature of 130°C or more in order to produce the casing. Thus there still remains a problem of formation of flashes and crystallization failure.

Patent Document 1: Japanese Patent Application Laid-open (KOKAI) No. S51-63860

Patent Document 2: Japanese Patent Application Laid-open (KOKAI) No. H07-41669

Patent Document 3: Japanese Patent Application Laid-open (KOKAI) No. H07-41670

Patent Document 4: Japanese Patent Application Laid-open (KOKAI) No. 2001-106902

Patent Document 5: Japanese Patent Application Laid-open (KOKAI) No. 2004-168849

DISCLOSURE OF THE INVENTION

PROBLEMS TO BE SOLVED BY THE INVENTION

The present invention concerns the provision of a polyamide resin composition having excellent crystallization rate and thin-wall moldability and affording thin-wall molded articles having excellent crystallinity, warping property and reduced flash formation while retaining mechanical strength as a polyamide MX, and of a molded article thereof.

MEANS FOR SOLVING THE PROBLEMS

The present inventors have made an earnest study with a view toward accomplishing the above object and, as a result, have found that the problem concerning crystallization of the above-described thin-wall molded articles can be solved by a resin composition comprising a polyamide MP (in which metaxylylenediamine and paraxylylenediamine with a ratio of (metaxylylenediamine/paraxylylenediamine) of (90 to 50 mole %):(10 to 50 mole %) are used as xylylenediamine that is a raw material of a polyamide MX) and, compounded therein, a polyamide resin having a melting point of not less than 245°C. It has also been found that low warpage performance required for thin-wall portable electronic devices can be met in a satisfactory manner, when the resin composition is further compounded with a plate-like filler and, if necessary, a fibrous filler in a specific proportion.

The present invention has been completed on the basis of the above findings. Thus, in the first aspect of the present invention, there is provided a polyamide resin composition comprising 30 to 80% by weight of a polyamide MP (A), 20 to 70% by weight of a polyamide resin (B) having a melting point of not less than 245°C (with the total amount of both being 100% by weight), and a filler (C) comprising a fibrous filler (C1) as an optional component and a plate-like filler (C2) as an essential component,

a content ratio (C1):(C2) of the fibrous filler (C1) to the plate-like filler (C2) being 0:10 to 9:1,

the filler (C) being present in an amount of 30 to 250 parts by weight per 100 parts by weight of the sum of the polyamide MP (A) and the polyamide resin (B), and

the polyamide MP (A) being a polyamide resin obtained by polycondensation of a mixed diamine comprising 90 to 50% by mole of metaxylylenediamine and 10 to 50% by mole of paraxylylenediamine with an $\alpha,\omega$-linear aliphatic dibasic acid and/or an aromatic dibasic acid.

In the second aspect of the present invention, there is provided a molded article produced by molding the polyamide resin composition as recited above. In the third aspect of the present invention, there is provided a process for producing the molded article as recited above, comprising a molding step performed under such a condition that a set temperature of a mold temperature controller is less than 90°C.

EFFECT OF THE INVENTION

According to the present invention, it is possible to provide a resin composition having improved crystallization rate and thin-wall moldability without adversely affecting impact resistance, strength and rigidity thereof, so that thin-wall molded articles can be produced without formation of molding flashes even when a low mold temperature of 130°C or less is used. Thus, it is possible to obtain a polyamide resin composition having excellent mechanical strength, crystallization performance and warping property and a thin-wall molded article thereof. The polyamide resin composition of the present invention, which has not only high rigidity and impact resistance, that are particularly required in the case of component parts of portable electronic devices, but also excellent low warpage, is suited for use in component parts of thin-wall portable electronic devices provided inside with circuit boards, such as PDAs, portable game machines, cellular phones, ID cards and electronic keys for automobiles.

BEST MODE FOR CARRYING OUT THE INVENTION

Polyamide resin composition:

The present invention will be described in detail below. The polyamide MP (A) used in the present invention is a polyamide resin obtained by polycondensation of a mixed diamine comprising xylylenediamine as a main component with an $\alpha,\omega$-linear aliphatic dibasic acid and/or an aromatic dibasic acid. More specifically, the polyamide MP (A) is a polyamide resin obtained by polycondensation of a mixed diamine comprising 50 to 90% by mole of metaxylylenediamine and 10 to 50% by mole of paraxylylenediamine, preferably 50 to 80% by mole of metaxylylenediamine and 20 to 50% by mole of paraxylylenediamine, with an $\alpha,\omega$-linear aliphatic dibasic acid and/or aromatic dibasic acid having 6 to 12 carbon atoms.

The mixed diamine may contain a diamine or diamines other than xylylenediamine, such as aliphatic diamines (e.g., tetramethylenediamine, 2-methylpentamethylenediamine and hexamethylenediamine), aromatic diamines (e.g., metaphenylenediamine and paraphenylenediamine) and alicyclic diamines (e.g., 1,3-bisaminomethylcyclohexane and 1,4-bisaminomethylcyclohexane). A proportion of the diamine or diamines other than xylylenediamine may be generally 10% by mole or less, preferably 5% by mole or less, based on the sum of the diamines.

As the $\alpha,\omega$-linear aliphatic dibasic acid and/or aromatic dibasic acid, there may be mentioned, for example, glutaric acid, adipic acid, azelaic acid, sebacic acid, suberic acid, dodecanedioic acid, isophthalic acid (I) and terephthalic acid (T). Above all, adipic acid, sebacic acid, suberic acid, dodecanedioic acid, etc. are preferred. More preferred is adipic acid.

The polyamide MP (A) used in the present invention generally has a relative viscosity of 2.0 to 4.0, preferably 2.0 to 2.7. When the relative viscosity is excessively low (which means that the resin has a low molecular weight), physical properties of the resin are not fully satisfactory. Too high a relative viscosity, on the other hand, causes a difficulty in molding. Further, it is difficult to prepare the polyamide resin MP having a relative viscosity greater than 4.0. Incidentally, as used in the present specification, the term "relative viscosity" is intended to refer to the viscosity as measured at a temperature of 23°C for a solution having a resin concentration of 1 g/100 mL using 96 % sulfuric acid as a solvent.

The content of the polyamide MP (A) is 30 to 80% by weight, preferably 30 to 70% by weight, based on the total amount (100% by weight) of the polyamide MP (A) and the polyamide resin (B) having a melting point of not less than 245°C. A content of the polyamide MP (A) less than 30% by weight causes a reduction in the modulus of elasticity. When the content exceeds 80% by weight, the crystallization rate at the time of molding is reduced.

In the present invention, the polyamide MP (A) is compounded with the polyamide resin (B) having a melting point of not less than 245°C in order to obtain a resin composition having improved crystallization rate and crystallinity of thin-wall molded articles.

The term "melting point" in the present invention is intended to refer to a peak top temperature of an endothermic peak as measured by differential scanning calorimetry (DSC). The endothermic peak is one which is observed in the second time heating performed after the first time heating in which a sample was fused to reduce, as much as possible, the influence of thermal hysteresis. To be more specific, the endothermic peak may be measured in the following manner. The sample is heated at a rate of 10°C/min from 30 to 300°C and maintained at 300°C for 2 minutes. The sample is then cooled at a rate of 20°C/min to 200°C and, thereafter, again heated at a rate of 10°C/min to 300°C. From the endothermic peak observed in the second time heating, the melting point is determined as the peak top temperature. The term "melting point of not less than 245°C" is intended to mean that the melting point measured by DSC is always 245°C or more within a relative viscosity range of 2.0 to 4.0.

Specific examples of the polyamide resin (B) having a melting point of not less than 245°C include polyamides 66, 6T, 46, 66/6T, 6T/6I, 66/6T/6I and, additionally, various high melting point polyamide resins obtained from terephthalic acid, isophthalic acid and/or adipic acid as a dibasic acid and hexamethylenediamine and/or methylpentadiamine as a diamine while controlling the mixing ratios thereof. Above all, polyamide 66 is preferred for reasons of easy availability at a low price, high crystallization rate and best thermal stability.

The polyamide resin (B) having a melting point of not less than 245°C generally has a relative viscosity of 2.0 to 4.0, preferably 2.0 to 2.7. When the relative viscosity is excessively low, physical properties of the resin are not fully satisfactory. Too high a relative viscosity, on the other hand, tends to cause a reduction in moldability.

The content of the polyamide resin (B) having a melting point of not less than 245°C is 20 to 70% by weight, preferably 30 to 70% by weight, based on the total amount (100% by weight) of the polyamide MP (A) and the polyamide resin (B) having a melting point of not less than 245°C. A content of the polyamide resin (B) having a melting point of not less than 245°C less than 20% by weight causes a reduction in the crystallization rate at the time of molding. When the content exceeds 70% by weight, the modulus of elasticity decreases.

In addition to the polyamide MP (A) and the polyamide resin (B) having a melting point of not less than 245°C, the resin composition of the present invention may be compounded with other polyamide resin or resins. As the "other polyamide resins" there may be suitably used, for example, polyamide 6/66, 66/6I and 6/6T/6I from the viewpoint of improvement of a surface appearance. Such "other polyamide resins" may be mixed with other thermoplastic resin or resins in the form of a polymer alloy. For example, from the viewpoint of improvement of chemical resistance and slidability of the polyamide resin used as the essential component, there may be suitably used a modified polypropylene resin, a polyethylene resin or a PPS resin as such "other thermoplastic resins". In addition, a PPE resin, an AS resin, an ABS resin, PET, etc. may be suited for improving the impact property.

The content of such "other polyamide resin or resins" and "other thermoplastic resin or resins" is generally not more than 50% by weight, preferably not more than 40% by weight, based on the total amount of the polyamide MP (A) and the polyamide resin (B).

For the purpose of improving warping characteristics, mechanical strength and rigidity, a filler (C) is compounded in the resin composition of the present invention. That is, a plate-like filler (C2) is used by itself or together with a fibrous filler (C1) preferably in a specific blending ratio shown below. Namely, the fibrous filler (C1) is a preferable optional component, while the plate-like filler (C2) is an essential component.

The fibrous filler (C1) is a filler having a fiber-like appearance. Specific examples of the fibrous filler include inorganic fibers such as glass fibers, carbon fibers and ceramic fibers, metal fibers such as stainless steel fibers and brass fibers, and organic fibers such as Kevler fibers.

In addition to the above, a filler with a powder-like appearance which has an aspect ratio of 5 or more may be preferably used. Specific examples of such a filler include whiskers of inorganic compounds, such as potassium titanate, aluminum borate, titanium oxide and calcium carbonate, and minerals, such as wollastonite, having an aspect ratio of 5 or more. Incidentally, since the aspect ratio changes during a compound step, the term "aspect ratio" as used herein is intended to refer to "aspect ratio of the raw material filler". The above fibrous fillers may be used in combination of two or more thereof.

When the fibrous filler (C1) is a glass fiber, the composition thereof may be arbitrary. However, the composition is preferably not that of a fused glass but, rather, is such that fibers thereof may be easily prepared. Thus, suitable examples of the composition include an E glass composition, a G glass composition, an S glass composition and an alkali resistant glass. The tensile strength of the glass fibers may be also arbitrary but is preferably 290 kg/mm$^2$ or more. In general, an E glass is preferred for reasons of easy availability.

It is preferred that the glass fiber be surface-treated with, for example, a silane coupling agent such as γ-methacryloxypropyltrimethoxysilane, γ-glycidoxypropyltrimethoxysilane and γ-aminopropyltriethoxysilane. The deposition amount of such a surface treating agent is generally 0.01% by weight or more based on the weight of the glass fiber.

Further, if necessary, the glass fiber may be surface treated with a lubricating agent such as an aliphatic amide compound and a silicone oil; an antistatic agent such as a quaternary ammonium salt; a mixed resin having a film forming property such as an epoxy resin, an acrylic resin and an urethane resin; and a surface treating agent in which a resin having a film forming property is used together with a heat stabilizing agent, a flame retarding agent, etc.

As the plate-like filler (C2), there may be mentioned, for example, glass flake, mica, talc, clay, graphite, sericite, montmorillonite, plate-like calcium carbonate and plate-like alumina. These fillers may be used in combination of two or more thereof. Above all, glass flake, mica and talc are preferred from the viewpoint of a balance of flexural characteristics, impact resistance, dimensional stability, fluidity and appearance. The use of glass flake which has most excellent impact resistance is most preferred, since portable electronic device parts are frequently required to have particularly high impact resistance.

Suitable glass flake as the plate-like filler (C2) is generally feasible as a commercial product having an E glass composition or a C glass composition. The average particle diameter of the glass flake varies with grade of the manufacturers. However, preferred is a flat plate-like glass flake having an average diameter of several tens μm to 1 mm,

more preferably 50 to 800 $\mu$m. Two or more kinds of glass flakes having different average particle sizes may be used together. The glass flake may be preferably surface-treated with, for example, a silane coupling agent such as $\gamma$-meth-acryloxypropyltrimethoxysilane, $\gamma$-glycidoxypropyltrimethoxysilane and $\gamma$-aminopropyltriethoxysilane. The deposition amount of such a surface treating agent is generally 0.01% by weight or more based on the weight of the glass flake.

Mica that is suitably used as the plate-like filler (C2) may be natural mica or synthetic mica. Mica is broadly classified into muscovite and phologopite, both of which may be used for the purpose of the present invention. Natural mica having an average particle diameter ranging from about 5 $\mu$m as the smallest to 1,000 $\mu$m as largest are commercially available. In the case of synthetic mica, mica with a few $\mu$m average particle diameter may be commercially available. In the present invention, mica having any size may be used. From the viewpoint of surface appearance and dimensional stability, the size is generally 5 to 100 $\mu$m. Two or more kinds of mica having different average particle sizes may be used together. It is also possible to use mica which has been surface-treated or which has been subjected to a sizing treatment to reduce the bulk density thereof.

Talc that is suitably used as the plate-like filler (C2) may be a mineral crystal comprising magnesium silicate as a main component. The average particle diameter of talc is not specifically limited, i.e. talc having any average particle diameter may be used. In a case where talc is compounded for reinforcing the resin composition, however, the average particle diameter is preferably 3 to 100 $\mu$m. Two or more kinds of talc having different average particle sizes may be used together. It is also possible to use talc which has been surface-treated or which has been subjected to a sizing treatment to reduce the bulk density thereof. Talc does not only have a reinforcing effect but also serves as a nucleating agent. Thus, talc can increase the crystallization rate of the resin composition and to improve the moldability thereof. In this case, it is preferred that a part of the component (C2) (for example, 0.3 to 5% by weight of the component (C2)) be substituted with talc having a small average particle diameter (for example, having an average particle diameter of about 1 to 10 $\mu$m).

The content of the filler (C) is 30 to 250 parts by weight, preferably 60 to 200 parts by weight, more preferably 70 to 160 parts by weight, per 100 parts by weight of the sum of the polyamide MP (A) and the polyamide resin (B) having a melting point of not less than 245°C, when the filler (C) is used as a reinforcing material. When the content is less than 30 parts by weight, the mechanical strength such as rigidity and effect of improving warpage become insufficient. When the content exceeds 250 parts by weight, it becomes difficult to prepare the resin composition.

The content ratio of the fibrous filler (C1) to the plate-like filler (C2) as a (C1):(C2) weight ratio, is 0:10 to 9:1. Though depending upon a balance between the required level of low warpage and the strength, the content ratio is preferably 1:9 to 8:2, more preferably 3:7 to 7:3. The content ratio of the component (C1) to the component (C2) within the above range is preferred for reasons of both improved mechanical strength and warping property of the molded article.

It is preferred that the resin composition of the present invention comprise a nucleating agent in order to increase the crystallization rate and to improve the moldability thereof. The nucleating agent is not specifically limited, i.e. any known inorganic nucleating agent or organic nucleating agent may be used. The average particle diameter of the inorganic nucleating agent is generally 0.01 $\mu$m to 20 $\mu$m, preferably 0.1 $\mu$m to 7 $\mu$m. The content of the nucleating agent is generally 0.001 to 8 parts by weight, preferably 0.01 to 4 parts by weight, per 100 parts by weight of the sum of the component (A) and the component (B). When the content is less than 0.001 part by weight, the expected effect is occasionally not obtainable. When the content is greater than 8 parts by weight, the nucleating agent may act as a foreign matter to occasionally cause a reduction in the strength or impact value.

A releasing agent is preferably incorporated into the resin composition of the present invention for the purpose of improving the releasability at the time of molding. Specific examples of the releasing agent include long chain aliphatic carboxylic acids having at least 14 carbon atoms, such as stearic acid and palmitic acid, and derivatives thereof (such as esters, alkali metal salts, alkaline earth metal salts and amides thereof); higher aliphatic alcohols having at least 14 carbon atoms, such as stearyl alcohol, and derivatives thereof; amines having at least 14 carbon atoms, such as stearyl amine, and derivatives thereof; waxes such as a low molecular weight polyethylene wax and a paraffin wax; silicone oils; and silicone rubbers. The content of the releasing agent is generally 0.03 to 1.5 parts by weight, preferably 0.03 to 0.5 part by weight, per 100 parts by weight of the sum of the component (A) and component (B). When the content falls within the above range, the effect of improving the mold releasability can be sufficiently achieved. It is also possible to prevent generation of gases at the time of molding and deterioration of the appearance of surfaces of the molded article.

In addition to the above-described components, various other additives customarily employed in polyamide resin compositions, such as a flame retarding agent, a stabilizer, a pigment, a dye and a weatherability improving agent, may be suitably compounded, if necessary,

For example, as the flame retarding agent, there may be used conventional phosphorus-type, halogen-type or silicone-type flame retarding agents. As the stabilizer, there may be mentioned those which are commonly used in polyamide resins, such as a mixed stabilizer comprising a copper halide-type stabilizing agent (for example, copper iodide, copper chloride and copper bromide) and/or an alkali metal halide-based stabilizing agent (for example, potassium iodide and potassium bromide), and an organic-type stabilizing agent (for example, hindered phenol-type and phosphite-type stabilizing agents).

In order to prevent the occurrence of an undesirable amide exchange reaction between the polyamide MP (A) and the polyamide resin (B) having a melting point of not less than 245°C, which might cause deterioration of the physical properties, it is effective to use an amide exchange-preventive stabilizer such as an inorganic acid salt or a hydroxide of a metal belonging to the Group 1 or 2 of the Periodic Table as disclosed in Paragraph [0014] of Japanese Patent Application Laid-open (KOKAI) No. 2003-105095.

The content of the stabilizer is generally 0.01 to 5 parts by weight, preferably 0.1 to 2 parts by weight, per 100 parts by weight of the sum of the component (A) and component (B). When the content is less than 0.01 part by weight, the effect of improving thermal discoloration, weatherability and light resistance becomes occasionally insufficient. When the content exceeds 5 parts by weight, the mechanical properties become occasionally deteriorated. The above-described stabilizers may be used in combination of two or more thereof.

Further, the resin composition of the present invention may contain an elastomer in order to improve the impact strength. Examples of the elastomer include a polyolefin-based elastomer, a diene-based elastomer, a polystyrene-based elastomer, a polyamide-based elastomer, a polyester-based elastomer, a polyurethane-based elastomer, a fluorine-based elastomer and a silicone-based elastomer. Above all, a polyolefin-based elastomer and a polystyrene-based elastomer are preferred. These elastomers may be used in a modified form so as to be made compatible with a polyamide and to enhance the effect thereof. Acid modification (preferably with maleic acid or maleic anhydride) and epoxy modification are suitable in the resin composition of the present invention. The content of the elastomer is generally 0.5 to 20 parts by weight, preferably 0.5 to 10 parts by weight, per 100 parts by weight of the sum of the component (A) and component (B).

A method for preparing the resin composition of the present invention is not specifically limited. The resin composition may be generally prepared by blending predetermined amounts of the above-described components (A), (B), (C2) and optionally incorporated component (C1) and other additives, the blend being subsequently melted and kneaded. The melting and kneading of the blend may be carried out by any known method. For example, a single or twin screw extruder, a Banbury mixer or similar devices may be used. In this case, all raw materials may be simultaneously fed to a base part of an extruder and melted and kneaded together to obtain pellets. Alternately, the components (A) and (B) and other components optionally incorporated as desired are first fed and melted, to which the component (C2) and, if desired, component (C1) are side-fed and kneaded together. Additionally, there may be adopted a method in which the components (A), (B), (C2) and other components optionally incorporated as desired are fed and melted, to which, if desired, the component (C1) is side-fed and kneaded together. Furthermore, there may be adopted a method in which two or more compounded blends having different additives or compositions are first pelletized and the resulting pellets are blended to obtain a pellet blend of the resin composition having the composition specified in the present invention, or a method in which part of a powder component or liquid component is separately blended with the pellets.

Molded article and process for producing same:

The resin composition of the present invention may be molded into various molded articles by a molding method commonly used for molding thermoplastic resin compositions, such as injection molding, blow molding and extrusion molding. Because of its excellent fluidity and mechanical characteristics, the resin composition is particularly suited for the production of a thin-wall molded article by injection molding. The obtained thin-wall molded article has not only high impact resistance and high rigidity but also an advantage that it is low in anisotropy and in warpage. Thus, the molded article is suited as component parts, such as interior structural members and casings, of portable computers such as electronic organizers, PDAs, portable electronic devices such as pocket bells, cellular phones, PHSs, etc., and is particularly suited as plate-like component parts thereof.

As used herein, the term "plate-like" is intended to refer to a thin, plate-like form, as a whole, a cross-section of which may be slightly curved or bent. Such a "plate-like" body may be provided with undulations, windows, holes or the like for its function and design purposes. In particular, the shape of the articles for the above-described portable electronic devices is generally thin and, therefore, component parts, such as inside structural bodies and casings, thereof can be generally said to be nearly plate-like form except their rib and hinge portions. For example, casings of folding type cellular phones are nearly plate-like as a whole except their rib and hinge portions. Such component parts are occasionally further provided with a number of holes and bosses. In the present invention, such component parts are regarded as being plate-like, as long as a total area of the holes and bosses is less than 50% of the whole area thereof. The resin composition of the present invention is suited for forming plate-like component parts having an average thickness, excluding rib, boss and hinge portions thereof, of 1.2 mm or less, since such component parts are required to have low warpage. Among such component parts, the resin composition of the present invention is particularly suited for forming flat plates (base boards) for supporting interior structural parts incorporated inside portable electronic devices.

The resin composition of the present invention has excellent crystallization characteristics. Therefore, with the resin composition of the present invention, it is possible to produce, by injection molding, portable electronic device parts having high crystallinity (specifically those having a degree of crystallization of 28% or more), even when the injection molding is carried out at such a low set temperature of a mold temperature controller that a sufficient crystallinity would not be obtained with an ordinary resin composition, specifically at a set temperature of a mold temperature controller of below 130°C, even below 110°C, and even below 90°C. The above effect is particularly significant when the thickness of the component part is thin, specifically when the thickness is 1.2 mm or less.

In the case where a portable electronic device part of the present invention is required to show EMI shield property, a carbon fiber, a metal fiber or a fiber (a glass fiber, a carbon fiber or an organic fiber) plated with a metal may be used as the fibrous filler (C1). It is also possible to impart EMI shield property to portable electronic device parts by electroconductive coating, metal plating or metal vapor deposition.

EXAMPLES

The present invention will be described in further detail below by way of examples and comparative examples. It should be noted, however, that the present invention is in no way limited to the examples but may be embodied in other forms so far as they do not depart from the gist of the present invention. Materials used in the following examples are as follows:

(A-1) Polyamide MP:

Prepared by the preparation example shown below.

A 3 L flask equipped with a stirrer, a thermometer, a reflux condenser, a raw material dropping device, a heater, etc. was charged with exactly 730 g of adipic acid. The inside temperature of the flask was raised to 160°C in the atmosphere of nitrogen to melt the adipic acid. Then, 680 g of mixed xylylenediamine comprising 30 mole % of paraxylylenediamine and 70 mole % of metaxylylenediamine were added dropwise to the flask over a period of about 2.5 hours. During the addition of the mixed xylylenediamine, the reaction was continued with stirring while always maintaining the inside temperature at a temperature higher than the melting point of the product. The temperature was raised to 270°C at the end stage of the reaction. The water formed as a result of the reaction was discharged outside the reaction system through a partial condenser. After the completion of the dropping, the reaction was further continued with stirring at 275°C for 1 hour and then terminated. The reaction product was taken out of the flask, cooled with water and pelletized. The obtained polyamide resin was found to have a melting point of 258°C, a crystallization temperature of 216°C, a relative viscosity (measured at 23°C with a concentration of 1 g/100 mL in 96% sulfuric acid) of 2.08.

(A-2) Polyamide MXD6: Trade name "POLYAMIDE MXD6 #6000" manufactured by Mitsubishi Gas Chemical Company, Inc. (polyamide resin produced from metaxylylenediamine and adipic acid; melting point: 243°C, crystallization temperature: 206°C, relative viscosity: 2.14)

(B-1) Polyamide 66: Trade name "ZYTEL 101" manufactured by DuPont Inc. (melting point: 264°C, relative viscosity: 3.0)

(B-2) Polyamide 6: Trade name "NOVAMID (registered trademark) 1007J" manufactured by Mitsubishi Engineering-Plastics Corporation (melting point: 225°C, relative viscosity: 2.14)

(B-3) Polyamide 46: Trade name "STANYL" manufactured by DSM Inc. (melting point: 295°C)

(C1) Glass fiber: chopped strands, Trade name "CS03JAFT2" manufactured by Asahi Fiber Glass Co., Ltd. (average fiber diameter: 10 $\mu$m, average fiber length: 3 mm (nominal value specified by the manufacturer))

(C2-1) Glass flake: Trade name "FLEKA REFG-301" manufactured by Nippon Sheet Glass Co., Ltd. (average diameter: about 600 $\mu$m (nominal value specified by the manufacturer))

(C2-2) Mica (phologopite): Trade name "MICA B82" manufactured by Hayashi-Kasei Co., Ltd. (average diameter: 82 $\mu$m (nominal value specified by the manufacturer))

(C2-3) Talc A: Trade name "MICRON WHITE 5000A" manufactured by Hayashi-Kasei Co., Ltd. (average diameter: 4.1 $\mu$m (nominal value specified by the manufacturer))

(C2-4) Talc B: Trade name "MICELTONE" manufactured by Hayashi-Kasei Co., Ltd. (average diameter: 1.4 $\mu$m (nominal value specified by the manufacturer))

Releasing agent: montanic acid ester wax, Trade name "LICOWAX E" manufactured by Clariant Japan K. K.

Examples 1 to 9 and Comparative Examples 1 to 16

(1) Preparation of Resin Composition Pellets

Respective components were weighed to have a composition shown in Tables 1 to 3. The weighed components except fibrous filler (C1) were blended using a tumbler and the blend was fed to a base part of a twin screw extruder ("TEM 35B" manufactured by Toshiba Kikai Co., Ltd., barrel: 10-block constitution) and melted, to which the component (C1) was side-fed from the 7th block (counted from the hopper side) to obtain pellets of respective resin compositions. The extruder was set at a temperature of 280°C throughout.

(2) Evaluation of Flexural Strength, Flexural Modulus and Charpy Impact Strength

Molding of ISO Test Pieces:

The pellets of each of the resin compositions prepared by the above method were dried at 80°C for 48 hours and molded using an injection molding machine ("100T" manufactured by Fanuc Ltd.) to produce ISO test pieces. The molding was carried out under conditions including a cylinder temperature of 280°C, a set temperature of a mold temperature controller of 130°C, an injection time of 20 seconds and a cooling time of 15 seconds. Further, when about 95% of the resin had been filled, V-P switching was made. The pressure holding was at a relatively high pressure of 620 kgf/cm$^2$ for 25 seconds to the extent that a molding flash was prevented from forming. For use in flexural test and Charpy impact test, the thus obtained ISO test pieces were each cut at both edges and formed with a notch in accordance with the ISO standard.

Evaluation:

Using the above-obtained test pieces for evaluation, flexural strength and flexural modulus were measured in accordance with the ISO 178 standard, and the Charpy notched impact strength was measured in accordance with the ISO 179 standard. The results are shown in Tables 1 to 3. The desired performance of molded articles of the present invention is such that the flexural strength is at least 150 MPa, the flexural modulus is at least 10 GPa and the Charpy notched impact strength is at least 2 MPa.

(3) Evaluation of Warping Property

Preparation of Molded Articles for Evaluation:

The pellets of each of the resin compositions prepared by the above method were dried at 80°C for 48 hours and molded using an injection molding machine ("100T" manufactured by Fanuc Ltd.) to produce molded articles for evaluation. The molding was carried out under conditions including a cylinder temperature of 280°C, pressure holding at 620 kgf/cm$^2$ for 25 seconds, an injection time of 15 seconds and a cooling time of 30 seconds, and at different set temperatures of a mold temperature controller of 80°C, 100°C and 130°C. The resin was filled in a mold cavity with a size of 100x100 mm and 1 mm thick through a fan gate (100 mm side and 0.8 mm thick) while controlling the metering value and position of V-P switching.

Evaluation of Warping Property:

The molded article for evaluation was cooled and taken out of the mold without cutting a gate portion. The molded article was allowed to stand at 25°C under a humidity of 65 % for day and night. The resulting molded article was then placed on a horizontal plane and measured for a distance between the side end opposite to the fan gate side and the horizontal plane, as a raised height, with the fan gate-side as a base. The warping property was evaluated based on the ratings shown below. The results are shown in Tables 1 to 3.
    A: raised height s 0.5 mm
    B: 0.5 mm < raised height $\leq$ 2.0 mm
    C: 2.0 mm < raised height

(In the Tables, the symbol "-" means that warping property was not evaluated because the mold releasability, described below, of the corresponding article was evaluated as "B" or "C".)

(4) Evaluation of Mold Releasability

Molding was carried out under the same conditions as those in the preparation of the molded articles in (3) above. In this case, releasability at the time of ejection was evaluated based on the ratings shown below. The results are shown in Tables 1 to 3.
    A: No particular problems
    B: Able to be released though deformed

C: The portion of the molded article in contact with the ejector was broken through or considerably deformed by the ejector and, therefore, it was necessary to manually release the molded article

(4) Evaluation of Crystallinity

The crystallinity was measured in terms of a degree of crystallization measured by DSC. With DSC, it is possible to investigate the melting point, calorific value and crystallization state of a material by analyzing the exothermic or endothermic process of the material during the melting or vaporization thereof by heating. The crystallinity was evaluated by the following method.

Molding was carried out under the same conditions as those in molding of the molded articles for evaluation in (3) above at different set temperatures of a mold temperature controller of 80°C, 100°C and 130°C. A sample of about 10 mg was cut out from each of the obtained molded articles at its central portion and subjected to DSC and measured for the calorific value of exothermic peak and endothermic peak during heating from 30°C to 300°C. The degree of crystallization was determined by the following formula (1).

$$\text{Degree of crystallization (\%) = (Calorific value (J/g)}$$

$$\text{of endothermic peak)-(Calorific value (J/g) of exothermic}$$

$$\text{peak)/(Theoretical heat of fusion (J/g) of each resin}$$

$$\text{composition)} \times 100 \ \ldots \ (1)$$

In the present invention, the theoretical heat of fusion is as measured by the following method. Namely, polyamide resins having various degrees of crystallization s are measured by DSC for their calorific values of endothermic peaks representing the melting points. The obtained calorific values of endothermic peaks are plotted against the degrees of crystallization in a two-dimensional chart to form a calibration curve. The calorific value at the extrapolated point of the intersection of the calibration curve with the 100% degree of crystallization line is the theoretical heat of fusion. The degrees of crystallization of the polyamide resins used for the DSC measurement were measured in accordance with JIS K7112 standard using a customarily employed density gradient tube method.

When the degree of crystallization is 28% or more, the crystallization of the molded article is regarded as having proceeded sufficiently. When the degree of crystallization is less than 28% but not less than 25%, the molded article is regarded as having no problem as a practically usable product though it lacks crystallinity a little. When the degree of crystallization is less than 25% but not less than 15%, the molded article is regarded as being problematic as a practically usable product because of its insufficient crystallinity. When the degree of crystallization is less than 15%, the molded article is regarded as being unable to be practically used because it hardly crystallizes. The results are shown in Tables 1 to 3.

Evaluation of Flash Formation:

Molding was carried out under the same conditions as those in molding of the molded articles for evaluation in (3) above at different set temperatures of a mold temperature controller of 80°C, 100°C and 130°C. The obtained molded articles were each observed for the presence or absence of a molding flash. When a flash was found, the maximum length of the flash, which was present within a region extending 10 mm from the fan gate side in the resin flow direction, was measured with a caliper. The flash formation was evaluated based on the ratings shown below. The results are shown in Tables 1 to 3.

A: No flash is present
B: Flash is mainly present near the fan gate Length of Flash $\leq$ 100 $\mu$m
C: Flash is mainly present near the fan gate 100 $\mu$m < Length of Flash $\leq$ 500 $\mu$m
D: Flash is mainly present near the fan gate 500 $\mu$m < Length of Flash
E: Flash is present in the whole surface of the molded article

[Table 1]

| | | Examples | | | | |
|---|---|---|---|---|---|---|
| | | 1 | 2 | 3 | 4 | 5 |
| (A-1)Polyamide MP | % by weight | 60 | 60 | 60 | 40 | 60 |
| (A-2)Polyamide MXD6 | | | | | | |
| (B-1)Polyamide 66 | | 40 | 40 | 40 | 60 | 40 |
| (B-2)Polyamide 6 | | | | | | |
| (B-3)Polyamide 46 | | | | | | |
| (C1)Glass fiber | parts by weight (based on (A)+(B) (100 parts)) | 60 | 60 | 60 | 60 | 75 |
| (C2-1)Glass flake | | 50 | | | | 75 |
| (C2-2)Mica | | | 50 | | 50 | |
| (C2-3)Talc A | | | | 50 | | |
| (C2-4)Talc B | | 2 | 2 | 2 | 2 | 2 |
| Releasing agent | | 0.2 | 0.2 | 0.2 | 0.2 | 0.2 |
| Evaluation | | | | | | |
| Flexural strength | MPa | 310 | 290 | 270 | 310 | 330 |
| Flexural modulus | GPa | 15.1 | 19.5 | 17.2 | 17.7 | 22.2 |
| Charpy notched impact strength | kJ/m$^2$ | 8 | 6 | 5 | 7 | 8 |
| t=1mm Square plate | | | | | | |
| Mold temperature | | | | | | |
| 80°C | Releasability | A | A | A | A | A |
| | Warpage | A | A | A | A | A |
| | Crystallinity | 28% | 29% | 30% | 33% | 28% |
| | Flash | A | A | A | A | A |
| 100°C | Releasability | A | A | A | A | A |
| | Warpage | A | A | A | A | A |
| | Crystallinity | 32% | 33% | 32% | 34% | 31% |
| | Flash | B | B | A | B | B |
| 130°C | Releasability | A | A | ·A | A | A |
| | Warpage | A | A | A | A | A |
| | Crystallinity | 33% | 34% | 34% | 34% | 33% |
| | Flash | B | B | A | B | B |

[Table 1 (continued)]

| | | Examples | | | |
|---|---|---|---|---|---|
| | | 6 | 7 | 8 | 9 |
| (A-1)Polyamide MP | % by weight | 60 | 60 | 60 | 60 |
| (A-2)Polyamide MXD6 | | | | | |
| (B-1)Polyamide 66 | | 40 | 40 | 40 | |
| (B-2)Polyamide 6 | | | | | |
| (B-3)Polyamide 46 | | | | | 40 |
| (C1)Glass fiber | parts by weight (based on (A)+(B) (100 parts)) | | | | 60 |
| (C2-1)Glass flake | | 110 | | | 50 |
| (C2-2)Mica | | | 110 | | |
| (C2-3)Talc A | | | | 110 | |
| (C2-4)Talc B | | 2 | 2 | 2 | 2 |
| Releasing agent | | 0.2 | 0.2 | 0.2 | 0.2 |
| Evaluation | | | | | |
| Flexural strength | MPa | 230 | 170 | 190 | 290 |
| Flexural modulus | GPa | 17.5 | 24.2 | 17.3 | 16.1 |
| Charpy notched impact strength | kJ/m² | 13 | 3 | 3 | 7 |
| t=1mm Square plate | | | | | |
| Mold temperature | | | | | |
| 80°C | Releasability | A | A | A | A |
| | Warpage | A | A | A | A |
| | Crystallinity | 28% | 29% | 30% | |
| | Flash | A | A | A | A |
| 100°C | Releasability | A | A | A | A |
| | Warpage | B | B | A | A |
| | Crystallinity | 30% | 30% | 32% | |
| | Flash | B | B | A | A |
| 130°C | Releasability | A | A | A | A |
| | Warpage | A | A | A | A |
| | Crystallinity | 33% | 34% | 34% | |
| | Flash | B | B | A | A |

[Table 2]

| | | Comparative Examples | | | |
|---|---|---|---|---|---|
| | | 1 | 2 | 3 | 4 |
| (A-1) Polyamide MP | % by weight | | | | |
| (A-2)Polyamide MXD6 | | 60 | 60 | 60 | 40 |
| (B-1)Polyamide 66 | | 40 | 40 | 40 | 60 |
| (B-2)Polyamide 6 | | | | | |
| (C1)Glass fiber | parts by weight (based on (A)+(B) (100 parts)) | 60 | 60 | 60 | 60 |
| (C2-1)Glass flake | | 50 | | | |
| (C2-2)Mica | | | 50 | | 50 |
| (C2-3)Talc A | | | | 50 | |
| (C2-4)Talc B | | 2 | 2 | 2 | 2 |
| Releasing agent | | 0.2 | 0.2 | 0.2 | 0.2 |
| Evaluation | | | | | |
| Flexural strength | MPa | 330 | 290 | 280 | 270 |
| Flexural modulus | GPa | 15.8 | 19.3 | 17.0 | 18.0 |
| Charpy notched impact strength | kJ/m$^2$ | 9 | 6 | 5 | 7 |
| t=1mm Square plate | | | | | |
| Mold temperature | | | | | |
| 80°C | Releasability | A | A | A | A |
| | Warpage | A | A | A | B |
| | Crystallinity | 22% | 20% | 24% | 23% |
| | Flash | C | C | C | C |
| 100°C | Releasability | A | A | A | A |
| | Warpage | A | A | A | B |
| | Crystallinity | 29% | 30% | 30% | 29% |
| | Flash | C | C | C | C |
| 130°C | Releasability | A | A | A | A |
| | Warpage | A | A | A | B |
| | Crystallinity | 33% | 34% | 34% | 34% |
| | Flash | C | C | B | C |

[Table 2 (continued)]

| | | Comparative Examples | | | |
|---|---|---|---|---|---|
| | | 5 | 6 | 7 | 8 |
| (A-1) Polyamide MP | % by weight | | | | |
| (A-2)Polyamide MXD6 | | 60 | 60 | 60 | 40 |
| (B-1)Polyamide 66 | | 40 | 40 | 40 | 60 |
| (B-2)Polyamide 6 | | | | | |
| (C1)Glass fiber | parts by weight (based on (A)+(B) (100 parts)) | 75 | | | |
| (C2-1)Glass flake | | 75 | 110 | | |
| (C2-2)Mica | | | | 110 | |
| (C2-3)Talc A | | | | | 110 |
| (C2-4)Talc B | | 2 | 2 | 2 | 2 |
| Releasing agent | | 0.2 | 0.2 | 0.2 | 0.2 |
| Evaluation | | | | | |
| Flexural strength | MPa | 360 | 230 | 170 | 190 |
| Flexural modulus | GPa | 21.5 | 17.5 | 24.2 | 17.3 |
| Charpy notched impact strength | kJ/m$^2$ | 11 | 13 | 3 | 3 |
| t=1mm Square plate | | | | | |
| Mold temperature | | | | | |
| 80°C | Releasability | A | A | A | A |
| | Warpage | A | A | A | A |
| | Crystallinity | 23% | 20% | 20% | 23% |
| | Flash | C | C | C | C |
| 100°C | Releasability | A | A | A | A |
| | Warpage | A | A | A | A |
| | Crystallinity | 28% | 29% | 30% | 30% |
| | Flash | C | C | C | C |
| 130°C | Releasability | A | A | A | A |
| | Warpage | A | A | A | A |
| | Crystallinity | 33% | 33% | 34% | 34% |
| | Flash | C | C | C | B |

[Table 3]

| | | Comparative Examples | | | |
|---|---|---|---|---|---|
| | | 9 | 10 | 11 | 12 |
| (A-1) Polyamide MP | % by weight | 60 | | | |
| (A-2)Polyamide MXD6 | | | 90 | 90 | 89 |
| (B-1)Polyamide 66 | | 40 | 10 | 10 | 11 |
| (B-2)Polyamide 6 | | | | | |
| (C1)Glass fiber | parts by weight (based on (A)+(B) (100 parts)) | 100 | | 100 | 67 |
| (C2-1)Glass flake | | | | | 56 |
| (C2-2)Mica | | | | | |
| (C2-3)Talc A | | | | | |
| (C2-4)Talc B | | 2 | 2 | 2 | 2 |
| Releasing agent | | 0.2 | 0.2 | 0.2 | 0.2 |
| Evaluation | | | | | |
| Flexural strength | MPa | 390 | 110 | 380 | 290 |
| Flexural modulus | GPa | 18.4 | 3.4 | 18.4 | 17.7 |
| Charpy notched impact strength | kJ/m$^2$ | 13 | 2 | 11 | 6 |
| t=1mm Square plate | | | | | |
| Mold temperature | | | | | |
| 80°C | Releasability | A | A | A | A |
| | Warpage | B | A | B | A |
| | Crystallinity | 28% | 9% | 11% | 13% |
| | Flash | B | C | C | C |
| 100°C | Releasability | A | C | C | C |
| | Warpage | C | – | – | – |
| | Crystallinity | 32% | 13% | 15% | 15% |
| | Flash | B | E | D | D |
| 130°C | Releasability | A | B | A | A |
| | Warpage | C | – | C | A |
| | Crystallinity | 33% | 33% | 34% | 32% |
| | Flash | B | E | D | D |

[Table 3 (continued)]

| | | Comparative Examples | | | |
|---|---|---|---|---|---|
| | | 13 | 14 | 15 | 16 |
| (A-1) Polyamide MP | % by weight | 100 | 100 | 60 | 60 |
| (A-2)Polyamide MXD6 | | | | | |
| (B-1)Polyamide 66 | | | | | |
| (B-2)Polyamide 6 | | | | 40 | 40 |
| (C1)Glass fiber | parts by weight (based on (A)+(B) (100 parts)) | 100 | 60 | 60 | 60 |
| (C2-1)Glass flake | | | 50 | 50 | |
| (C2-2)Mica | | | | | |
| (C2-3)Talc A | | | | | 50 |
| (C2-4)Talc B | | 2 | 2 | 2 | 2 |
| Releasing agent | | 0.2 | 0.2 | 0.2 | 0.2 |
| Evaluation | | | | | |
| Flexural strength | MPa | 380 | 325 | 290 | 265 |
| Flexural modulus | GPa | 19.1 | 18.9 | 14.9 | 16.8 |
| Charpy notched impact strength | kJ/m$^2$ | 12 | 7 | 6 | 5 |
| t=1mm Square plate | | | | | |
| Mold temperature | | | | | |
| 80°C | Releasability | A | A | A | A |
| | Warpage | B | A | A | A |
| | Crystallinity | 19% | 21% | 25% | 26% |
| | Flash | B | B | C | C |
| 100°C | Releasability | A | A | A | A |
| | Warpage | C | A | A | A |
| | Crystallinity | 24% | 25% | 26% | 28% |
| | Flash | C | C | C | C |
| 130°C | Releasability | A | A | A | A |
| | Warpage | C | A | C | C |
| | Crystallinity | 33% | 33% | 34% | 34% |
| | Flash | C | C | D | D |

From the above Tables, the following points are understood.

(1) In Examples 1 to 9 in which the contents of the polyamide MP, polyamide 66 and filler all fall within the ranges required in the present invention, the rigidity, impact resistance, mold releasability, crystallinity of the molded articles, and low warpage performance are excellent. Further, flashes are hardly formed.

(2) In Comparative Examples 1 to 8 in which the polyamide MXD6 is used in place of the polyamide MP used in Examples 1 to 8 and the contents of the polyamide MXD6 and polyamide 66 fall within the ranges required in the present invention, the crystallinity of the thin-wall molded articles is lower than that in Examples 1 to 8. Further, molding flash tends to be formed more easily. A reduction of crystallinity is significant particularly when the molding is performed at a low mold temperature.

(3) In Comparative Example 9 in which the content ratio of the polyamide MP and polyamide 66 falls within the range required in the present invention but the content ratio of the fibrous filler and plate-like filler does not fall within the range required in the present invention, the warping property of the molded product is deteriorated as compared with that in Examples 1 to 3 in which the content ratio of the polyamide MP and polyamide 66 is the same and the filler content is nearly the same as those in Comparative Example 9 but the content ratio of the fibrous filler and plate-like filler falls within the range required in the present invention.

(4) In Comparative Examples 10 to 12 in which the polyamide MXD6 is used in place of the polyamide MP and the contents of the polyamide MXD6 and polyamide 66 do not fall within the ranges required in the present invention, the mold releasability, warping property of the thin-wall molded articles, and crystallinity are inferior. Further, flashes are apt to be formed. The crystallinity is low particularly when the mold temperature is low.

(5) When Example 1 is compared with Comparative Examples 13 and 14, it is seen that the conjoint use of the polyamide MP and polyamide 66 as the polyamide resin can improve the crystallinity of the molded articles and reduce the formation of molding flashes. The improvement of the crystallinity is significant when the molding is carried out at a low mold temperature.

(6) In Comparative Examples 15 and 16 in which the polyamide 6 having a melting point of 225°C is used in place of the polyamide 66, the crystallinity of the molded articles, warpage property and flash formation property are inferior as compared with those in Examples 1 and 3.

As will be understood from the foregoing, the objects of the present invention can be accomplished when the content ratio of the polyamide MP and polyamide 66 falls within the range required in the present invention and when the plate-like filler is used, preferably together with the fibrous filler in a specific proportion.

According to the present invention it is possible to improve the crystallization rate and thin-wall moldability of a resin composition, to form a thin-wall at a low mold temperature of less than 130°C, to omit a molding flash removing step because of low flash formation and to produce moldings at a low cost. The resin composition of the present invention, which has not only high rigidity and impact resistance, that are particularly required in the case of portable electronic device parts, but also excellent low warpage, is suited for use in component parts of portable electronic devices provided inside with circuit boards, such as PDAs, portable game machines, cellular phones, ID cards and electronic keys for automobiles.

## Claims

1. A polyamide resin composition comprising 30 to 80% by weight of a polyamide MP (A), 20 to 70% by weight of a polyamide resin (B) having a melting point of not less than 245°C (with the total amount of both being 100% by weight), and a filler (C) comprising a fibrous filler (C1) as an optional component and a plate-like filler (C2) as an essential component,
   a content ratio (C1):(C2) of the fibrous filler (C1) to the plate-like filler (C2) being 0:10 to 9:1,
   the filler (C) being present in an amount of 30 to 250 parts by weight per 100 parts by weight of the sum of the polyamide MP (A) and the polyamide resin (B), and
   the polyamide MP (A) being a polyamide resin obtained by polycondensation of a mixed diamine comprising 90 to 50% by mole of metaxylylenediamine and 10 to 50% by mole of paraxylylenediamine with an $\alpha,\omega$-linear aliphatic dibasic acid and/or an aromatic dibasic acid.

2. The polyamide resin composition according to claim 1, wherein the content ratio (C1):(C2) of the fibrous filler (C1) to the plate-like filler is 0:10 to 9:2.

3. The polyamide resin composition according to claim 1 or 2, wherein the polyamide resin (B) having a melting point not less than 245°C is a polyamide 66.

4. The polyamide resin composition according to any one of claims 1 to 3, wherein the fibrous filler (C1) is at least one member selected from the group consisting of glass fibers, carbon fibers and whiskers of inorganic compounds.

5. The polyamide resin composition according to any one of claims 1 to 4, wherein the plate-like filler (C2) is at least one member selected from the group consisting of glass flakes, mica and talc.

6. The polyamide resin composition according to any one of claims 1 to 3, wherein the fibrous filler (C1) is a glass fiber and the plate-like filler (C2) is glass flake.

7. The polyamide resin composition according to any one of claims 1 to 6, which is used for portable electronic devices.

8. A molded article produced by molding the polyamide resin composition as defined in any one of claims 1 to 7.

9. The molded article according to claim 8, wherein the molded article has a flat plate-like form and has an average thickness, excluding ribs, bosses and hinges, of 1.2 mm or less.

10. The molded article according to claim 8 or 9, wherein the molded article has a degree of crystallization of at least 28%.

11. A process for producing the molded article according to any one of claims 8 to 10, comprising a molding step performed under such a condition that a set temperature of a mold temperature controller is less than 90°C.

## INTERNATIONAL SEARCH REPORT

| | International application No. |
|---|---|
| | PCT/JP2007/000562 |

**A. CLASSIFICATION OF SUBJECT MATTER**
*C08L77/00*(2006.01)i, *C08K7/00*(2006.01)i, *C08L77/06*(2006.01)i

According to International Patent Classification (IPC) or to both national classification and IPC

**B. FIELDS SEARCHED**

Minimum documentation searched (classification system followed by classification symbols)
C08L77/00-77/12, C08K7/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 4-154864 A  (Mitsubishi Gas Chemical Co., Inc., Fujitsu Ltd., Fujitsu Kasei Kabushiki Kaisha),<br>27 May, 1992 (27.05.92),<br>Claims; page 2, lower left column, line 5 to page 3, upper right column, line 19; page 3, lower right column, line 1 to page 4, upper left column, line 8; page 5, lower right column, lines 3 to 6; page 6, lower left column, lines 5 to 13<br>(Family: none) | 1-10<br>1-11 |
| X<br>Y | JP 6-32981 A  (Mitsubishi Gas Chemical Co., Inc.),<br>08 February, 1994 (08.02.94),<br>Claims; Par. Nos. [0005], [0006], [0012]<br>& EP 580387 A1          & US 5412013 A | 1-10<br>11 |

☒  Further documents are listed in the continuation of Box C.          ☐  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>26 July, 2007 (26.07.07) | Date of mailing of the international search report<br>07 August, 2007 (07.08.07) |
|---|---|
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

| | International application No. |
|---|---|
| | PCT/JP2007/000562 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2005-67107 A (Mitsubishi Engineering-Plastics Corp.),<br>17 March, 2005 (17.03.05),<br>Claims 1, 2; Par. Nos. [0013] to [0015], [0017]<br>(Family: none) | 1-8,10<br>11 |
| Y | JP 51-63860 A (Mitsubishi Gas Chemical Co., Inc.),<br>02 June, 1976 (02.06.76),<br>Claims; page 1, lower right column, lines 12 to 14; page 2, upper left column, line 15 to upper right column, line 12; page 2, lower left column, line 5 to page 3, upper left column, line 18; page 3, lower left column, line 12 to page 4, upper left column, line 3; page 4, lower left column, lines 8 to 13; page 6, upper left column, line 1 to lower left column, line 1<br>& DE 2552804 A        & US 3968071 A<br>& GB 1490453 A | 1-11 |
| A | JP 2001-146550 A (Kabushiki Kaisha Emusu Showa Denko),<br>29 May, 2001 (29.05.01),<br>Claims; Par. Nos. [0008] to [0010], [0015], [0016], [0021]<br>& WO 2001/038439 A1     & EP 1248818 A1 | 1-11 |
| A | JP 7-41669 A (Mitsubishi Gas Chemical Co., Inc.),<br>10 February, 1995 (10.02.95),<br>Claims; Par. Nos. [0003], [0004], [0008], [0012], [0022]<br>(Family: none) | 1-11 |
| A | JP 06-240132 A (Fujitsu Ltd.),<br>30 August, 1994 (30.08.94),<br>Claims 1, 2; Par. Nos. [0016], [0029], [0032], [0039], [0040], [0070]<br>& EP 611805 A1          & US 5470909 A<br>& US 5631070 A | 1-11 |
| A | JP 2004-168849 A (Fujitsu Ltd.),<br>17 June, 2004 (17.06.04),<br>Claims; Par. Nos. [0001], [0012], [0023], [0048]<br>(Family: none) | 1-11 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5163860 B
- JP H0741669 B
- JP H0741670 B

- JP 2001106902 A
- JP 2004168849 A
- JP 2003105095 A